# EUROPÄISCHE PATENTSCHRIFT

(11) **EP 0 263 471 B1**
(45) Veröffentlichungstag und Bekanntmachung des Hinweises auf die Patenterteilung: **07.01.1993**
(21) Anmeldenummer: 87114524.9
(22) Anmeldetag: 05.10.1987
(51) Int. Cl.: A01C 17/00, A01C 15/00

(54) **Schleuderdüngerstreuer**
Fertilizer broadcaster
Distributeur d'engrais à disque centrifuge

(30) Priorität: 07.10.1986 DE 3634096
(43) Veröffentlichungstag der Anmeldung: 13.04.1988
(73) Patentinhaber: Amazonen-Werke H. Dreyer GmbH & Co. KG, D-49202 Hasbergen (DE)
(72) Erfinder: Dreyer, Heinz, Dr. Dipl. Ing., D-4507 Hasbergen (DE)
(74) Vertreter: Grünecker, Kinkeldey, Stockmair & Schwanhäusser Anwaltssozietät

(56) Entgegenhaltungen:
- EP-A- 0 211 361
- DE-A- 2 407 085
- DE-A- 2 804 253
- FR-A- 2 144 225
- FR-A- 2 450 551
- FR-A- 2 553 251
- GB-A- 2 020 154

## Beschreibung

Die Erfindung betrifft ein Verfahren nach dem Oberbegriff des Anspruchs 1.

Ein derartiges Verfahren ist der DE-GM 71 16 432 entnehmbar. Dieser mit einer Reihenstreuvorrichtung ausgerüstete Schleuderdüngerstreuer ist mit einem die als Schleuderscheiben ausgebildeten Streuorgane umgebenen Auffangbehälter ausgerüstet. Dieser Auffangbehälter ist im Bereich der Schleuderscheiben derart angeordnet, daß er die von den Schleuderscheiben abgeschleuderten Düngmittelpartikel auffängt. Die jeweils von einem Streuorgan abgeschleuderten Düngemittelpartikel werden auf zwei Auslauföffnungen verteilt und zum Boden gleitet, so daß sich mit einem derartigen Zweischeibenschleuderdüngerstreuer eine vierreihige Reihenstreuvorrichtung mit Dünger versorgen läßt. Um allen Auslauföffnungen der Reihenstreuvorrichtung den gleichen Anteil der von den Streuorganen abgeworfenen Gesamtdüngermenge zuzuteilen, ist jeweils zwischen zwei einem Streuorgan zugeordneten Auslauföffnungen eine in Richtung auf das jeweilige Streuorgan weisende Leit- bzw. Aufteileinrichtung verstellbar und in einstellbaren Lage arretierbar angeordnet, so daß die von einem Streuorgan abgeschleuderten Düngemittelpartikel gleichmäßig auf jeweils zwei Auslauföffnungen verteilt werden.

Dieser mit einer Reihenstreuvorrichtung zum Düngen von Reihenkulturen ausgerüstete Schleuderdüngerstreuer weist den Nachteil auf, daß die Düngemittelpartikel mit der gleichen Abwurfgeschwindigkeit wie beim Normalstreuen, also beim Einsatz des Schleuderdüngerstreuers ohne Reihenstreuvorrichtung, abgeschleudert und folglich mit hoher Geschwindigkeit in den Auffangbehälter geworfen werden. Die in den Auffangbehälter hineingeschleuderten Düngemittelpartikel treffen also mit großer Energie auf die Wände des Auffangbehälters auf und prallen von diesen teilweise unkontrolliert zurück. Hierdurch ist eine gleichmäßige Aufteilung des von den Streuorganen abgeschleuderten Düngemittelstromes auf die einzelnen Auslauföffnungen sehr schwierig und teilweise unmöglich. Dadurch, daß die Düngemittelpartikel mit hoher Geschwindigkeit in den Auffangbehälter abgeschleudert werden und mit großer Energie auf die Wände des Auffangbehälters auftreffen, führt dies zu Kornzerschlagungen, Staubentwicklungen und Beschädigungen an Teilen des Auffangbehälters. Infolge des Körnerbruches und der hieraus resultierenden staubförimgen Teile des Düngemittels wird eine gleichmäßige Zuteilung auf die einzelnen Auslauföffnungen unmöglich.

Die durch die hohen Abwurfgeschwindigkeiten der Düngemittelpartikel von den als Schleuderscheiben ausgebildeten Streuorganen entstehenden, geschilderten Nachteile, werden in jüngster Zeit immer größer, da von der landwirtschaftlichen Praxis Schleuderdüngerstreuer mit großen Arbeitsbreiten von 18 bis 24 m und mehr gefordert werden. Mit den modernen Zentrifugaldüngerstreuern lassen sich die Düngemittelpartikel über derartige Arbeitsbreiten abschleudern. Zum Erreichen dieser großen Arbeitsbreiten müssen die Schleuderscheiben mit höheren Umfangsgeschwindigkeiten angetrieben werden, so daß die Düngemittelpartikel eine höhere Abwurfgeschwindigkeit erreichen und mit einer größeren Energie abgeschleudert werden und demzufolge eine weitere Flugbahn beschreiben. Durch diese höheren Umfangsgeschwindigkeiten der Schleuderscheiben werden die Nachteile hinsichtlich der Kornzerschlagungen, Staubentwicklungen und Beschädigungen an Teilen der Auffangvorrichtung der Reihenstreuvorrichtung beim Ausrüsten derartiger, für große Arbeitsbreiten geeigneter Schleuderdüngerstreuer mit einer Reihenstreuvorrichtung noch wesentlich vergrößert.

In der parallelen EP-A-0 211 361, die als Stand der Technik nach Artikel 54(3) gilt, wird ein Verfahren beansprucht, bei dem die Abwurfgeschwindigkeit durch Verwendung spezieller Schleuderscheiben so herabgesetzt wird, daß sich eine Verteilung nur über die Breite des Auffangbehälters ergibt.

Aus der DE-OS 24 07 085 ist eine Reihenstreuvorrichtung bekannt, bei der der Dünger in einen Auffangbehälter abgeschleudert wird. Eine Verminderung der Abwurfgeschwindigkeit gegenüber dem normalen Arbeiten des Düngerstreuers ist dort nicht beschrieben.

Aus der GB-2 020 154 ist es prinzipiell bekannt, bei einem Schleuderdüngerstreuer mit veränderlichen Drehzahlen der Schleuderscheiben zu arbeiten. Dort wird jedoch keine Reihenstreuvorrichtung beschrieben.

Der Erfindung liegt daher die Aufgabe zugrunde, ein Verfahren zu finden, wie man auch Schleuderdüngerstreuer, die für das Breitstreuen des Düngers über Arbeitsbreiten von 18 bis 24 m und mehr konzipiert und ausgebildet sind, zum Reihendüngerstreuen, beispielsweise zum Maisdüngen, einsetzen kann.

Diese Aufgabe wird in erfindungsgemäßer Weise durch das in Anspruch 1 beschriebene Verfahren gelöst. Infolge dieser Maßnahmen ist es in besonders vorteilhafter Weise möglich, die für das Ausstreuen der Düngemittel über große Arbeitsbreiten geeigneten Schleuderdüngerstreuer auch für das Düngen von Reihenkulturen durch die Anordnung einer Reihenstreuvorrichtung zu nutzen.

In erfindungsgemäßer Weise ist vorgesehen, daß die niedrigere Abwurfgeschwindigkeit an der Abwurfkante der Wurfelemente durch Änderung der Antriebsdrehzahl der Schleuderscheiben erreichbar ist, wobei die Verringerung der Antriebszahl der Schleuderscheiben beispielsweise ein Welcheselgetriebe oder ein regelbares Getriebe erreichbar ist. Die Reduzierung der Antriebsdrehzahl der Schleuderscheiben stellt eine gute Möglichkeit zur Verringerung der Abwurfgeschwindigkeit für die Düngemittelpartikel dar, so daß die Düngemittelpartikel beim Reihendüngen mit einer erfindungsgemäßen verlangsamten Geschwindigkeit auf die Wandungen des Auffangbehälters auftreffen.

In weiterer Ausgestaltung ist vorgesehen, daß die niedrige Abwurfgeschwindigkeit an der Abwurfkante der Wurfelemente durch Veränderung der Streuorgane und durch Herabsetzung der Betriebsdrehzahl erreichbar ist. Hierbei können die Schleuderscheiben mit ihren Wurfelementen gegen anders ausgebildete Schleuderscheiben und/oder anders ausgebildete Streuorgane, sowie die Wurfelemente gegen anders ausgebildete Wurfelemente ausgetauscht bzw. die Wurfelemente unterschiedlich auf den Schleuderscheiben angeordnet werden. Infolge dieser Maßnahmen läßt sich der für das Normalstreuen für große Arbeitsbreiten konzipierte Zentrifugaldüngerstreuer in einfacher weise für die Reihendüngung von Reihenkulturen mit einer Reihenstreuvorrichtung umrüsten.

Eine weitere Möglichkeit zur Reduzierung der Abwurfgeschwindigkeit wird dadurch erreicht, daß die Herabsetzung der Antriebsdrehzahl der Schleuderscheiben von der Antriebsdrehzahl für das Normaldüngen auf eine niedrigere Antriebsdrehzahl für das Reihendüngen durch Verringerung der Motordrehzahl bzw. der Zapfwellendrehzahl des Schleppers, insbesondere in Verbindung mit der Veränderung der Streuorgane erreicht wird.

Es ist in erfindungsgemäßer Weise vorgesehen, daß bei einer Maschine für die normale Streuarbeit mit etwa 18 bis 24 m und mehr Arbeitsbreite eine Umfangsgeschwindigkeit an den Abwurfkanten von ca. 20 bis 30 m pro Sekunde einstellbar ist, während die Umfangsgeschwindigkeit an den Abwurfkanten der Abwurfelemente für die Reihendüngung mit sechs bis acht Reihen auf etwa 8 bis 10 m pro Sekunde reduzierbar ist. Infolge dieser Maßnahmen läßt sich ein und derselbe Zentrifugaldüngerstreuer durch nur wenige Handgriffe vom Normalstreuen über große Arbeitsbreiten auf das Reihendüngen mit einer Reihenstreuvorrichtung umrüsten.

Weitere Einzelheiten der Erfindung sind der Beispielsbeschreibung und den Zeichnungen zu entnehmen. Hierbei zeigen
- Fig. 1: den für das "Normalstreuen" ausgerüsteten Schleuderdüngerstreuer in der Ansicht von hinten,
- Fig. 2: die Schleuderscheibe für das "Normaldüngen" in der Ansicht von oben und in vergrößertem Maßstab,
- Fig. 3: eine Schleuderscheibe für das Reihenstreuen ebenfalls in vergrößertem Maßstab,
- Fig. 4: eine weitere, für das Reihenstreuen geeignete, einen kleineren Durchmesser aufweisende Reihenstreuscheibe,

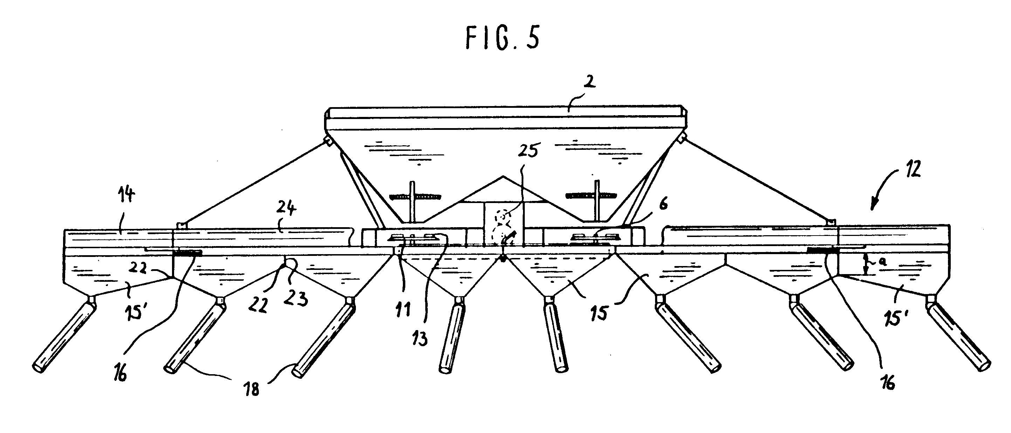

- Fig. 5: die Rückansicht eines Schleuderdüngerstreuers mit einer Reihenstreuvorrichtung,
- Fig. 6: der Schleuderdüngerstreuer gemäß Fig. 5 in der Ansicht von oben und

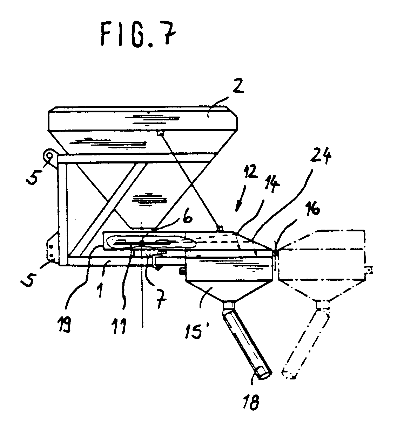

- Fig. 7: der Schleuderdüngerstreuer gemäß der Fig. 5 in der Seitenansicht.

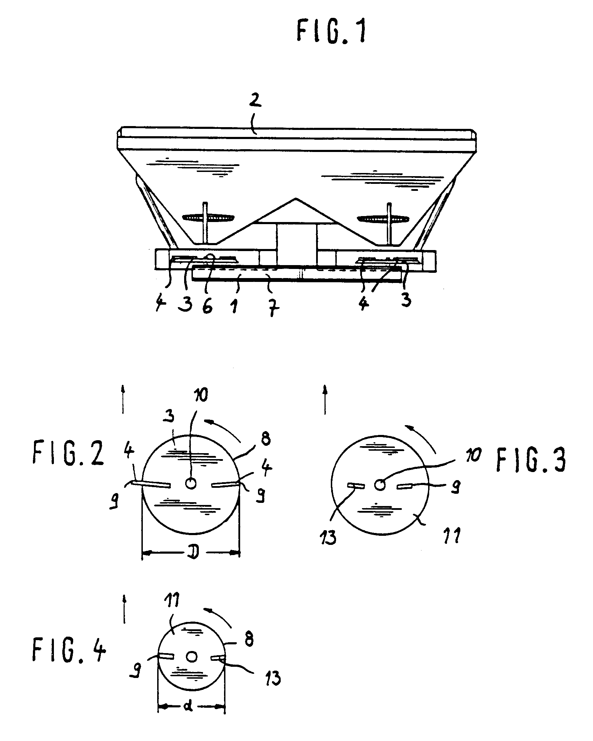

Der Schleuderdüngerstreuer gemäß Fig. 1 weist den Rahmen 1, den Vorratsbehälter 2 sowie die unter dem Vorratsbehälter 2 angeordneten Schleuderscheiben 3 mit den Wurfelementen 4 auf. An der Vorderseite des Rahmens 1 sind die Dreipunktkupplungselemente 5 angeordnet, so daß sich der Schleuderdüngerstreuer an den Dreipunktkraftheber eines Schleppers anbauen läßt. Die Schleuderscheiben 3 sind auf je einer Getriebeausgangswelle 6 abnehmbar angeordnet. Die Getriebeausgangswellen 6 enden derart in einem Abstand unterhalb des Vorratsbehälters 2, so daß die Schleuderscheiben 3 ohne Demontage des Getriebes 7 bzw. des Vorratsbehälters 2 von den Wellen 6 abnehmbar bzw. auf diese aufsetzbar sind.

Der Schleuderdüngerstreuer gemäß Fig. 1 ist für das breitwürfige Streuen (Normalstreuen) vorgesehen. Mit Hilfe der auf den Getriebeausgangswellen 6 angeordneten Schleuderscheiben 3 werden die Düngemittelpartikel über einen großen Arbeitsbereich abgeschleudert, so daß Arbeitsbreiten von bis zu 24 m und mehr erreichbar sind. Hierbei müssen die Schleuderscheiben 3 eine sehr große Umfangsgeschwindigkeit aufweisen, so daß die Düngemittelpartikel in gleichmäßiger Weise über den gesamten Streubereich abgeschleudert werden. Diese hohen Umfangsgeschwindigkeiten der Schleuderscheiben 3 lassen sich durch Schleuderscheiben mit einem großen Durchmesser D erreichen, wobei die Wurfelemente 4 sich zumindest bis an den äußeren Rand 8 oder über diesen hinaus erstrecken. Hierdurch wird erreicht, daß die den Schleuderscheiben 3 aus dem Vorratsbehälter 2 zugeführten Düngemittelpartikel an der jeweiligen Abwurfkante 9 mit einer großen Abwurfgeschwindigkeit von den Wurfelementen 4 abgeschleudert werden. Je nach erforderlicher Arbeitsbreite betragen die Umfangsgeschwindigkeiten an den Abwurfkanten 9 der Wurfelemente 4 Umfangsgeschwindigkeiten von ca. 20 bis 30 m pro Sekunde. Je nach erforderlicher Arbeitsbreite, die bei der Getreidedüngung evtl. durch ein gegebenes Fahrgassensystem vorgegeben ist, wird durch Drehzahlreduzierung und gegebenenfalls zusätzlich durch den Einsatz von Streuscheiben 3 mit unterschiedlichen Durchmessern D oder durch die Anordnung verschieden langer Wurfelemente 4 erreicht. Im wesentlichen ist der Abstand zwischen der Abwurfkahte 9 der jeweiligen Wurfelemente 4 von der Drehachse 10 der Schleuderscheibe 3 für die Abwurfgeschwindigkeit, mit der die Düngemittelpartikel von den Wurfelementen 4 der Schleuderscheiben 3 abgeschleudert werden, ausschlaggebend. Je größer der Abstand zwischen der Drehachse 10 und der Abwurfkante 9 eines jeden Wurfelementes 4, desto größer ist die Abwurfgeschwindigkeit der Düngemittelpartikel von der Schleuderscheibe 3.

Soll nun der Schleuderdüngerstreuer für das Düngen von Reihenkulturen, beispielsweise zum Düngen von Mais, eingesetzt werden, wird die Drehzahl reduziert und es können zusätzlich auch die Normalstreuscheiben 3 gegen die Reihenstreuscheiben 11 ausgetauscht und die Reihenstreuvorrichtung 12 mittels Schnellverschlüsse an der Rückseite des Rahmens 1 befestigt werden.

Die Reihenstreuscheiben 11 weisen die Wurfelemente 13 auf. Bei den Reihenstreuscheiben 11 kann es sich um die mit anderen Wurfelementen 13 versehenen Normalstreuscheiben 3 handeln. Hierbei sind die Wurfelemente 13 derart auf der Reihenstreuscheibe 11 angeordnet, so daß ihre Abwurfkante 9 einen wesentlich geringeren Abstand zur Drehachse 10 der Schleuderscheibe 11 aufweist, als die Abwurfkante der Wurfelelemente 4 der Normalstreuscheiben 3. Dadurch, daß die Abwurfkante 9 der Wurfelemente 13 einen geringeren Abstand zur Drehachse 10 der Schleuderscheibe aufweist, werden die von den Wurfelementen abgeschleuderten Düngemittelpartikel mit einer wesentlich geringeren Abwurfgeschwindigkeit abgeschleudert als bei der Normalstreuscheibe 3 gemäß Fig. 2. Diese niedrige Abwurfgeschwindigkeit der Düngemittelpartikel läßt sich auch durch Streuscheiben mit einem kleineren Durchmesser d, wobei die jeweilige Abwurfkante 9 der Wurfelemente 13 etwa mit dem äußeren Rand 8 der Reihenstreuscheiben 11 zusammenfällt, erreichen.

Die Reihenstreuvorrichtung 12 ist mit einem Auffangbehälter 14 versehen, der in der Mitte sechs fest miteinander verbundene trichterförmige Teilkästen 15 aufweist. In Verlängerung dieser Teilkästen 15 ist Jeweils an den Außenseiten ein weiterer Teilkasten 15' mit Hilfe von Gelenken 16 angeordnet. Somit können diese Teilkästen 15' in eine Arbeitsstellung seitlich neben die Teilkästen 15 und nach hinten um 180^{o} in eine Transportstellung geschwenkt werden. Die trichterförmigen Teilkästen 15 und 15' weisen in ihrem unteren Bereich je eine Öffnung 17 auf, an die jeweils die schlauchförmige Leitung 18 angeschlossen ist. Diese Leitungen 13 sind verschwenkbar und feststellbar an den Teilkästen 15 und 15' angeordnet, so daß die Reihenstreuvorrichtung 12 an unterschiedliche Reihenweiten angepaßt werden kann. Weiterhin weist die Reihenstreuvorrichtung 12 ein leicht lösbar mit dem Auffangbehälter 14 verbundenes Gehäuse 19 auf, welches um die Schleuderscheiben 11 herum angeordnet ist. Die aus dem Vorratsbehälter 2 des Schleuderdüngerstreuers über nicht dargestellte Dosierorgane, beispielsweise in Form von mittels eines einstellbaren Schiebers in unterschiedliche Öffnungsweiten einstellbaren Auslauföffnungen, abgegebenen Düngemittel gelangen durch eine nicht dargestellte Öffnung im Gehäuse 19 auf die Schleuderscheiben 11. Hier werden die Düngemittelpartikel von den Wurfelementen 13 der rotierenden Schleuderscheiben 11 erfaßt und innerhalb des Gehäuses 19 in Richtung des Auffangbehälters 14 geschleudert, wobei oberhalb desselben bzw. der Teilkästen 15 einstellbare Leitbleche angeordnet sind, um so sicherzustellen, daß jeder Leitung 18 die gleiche Düngermenge zugeführt wird. Das abgeschlossene Gehäuse 19 gewährleistet, daß keine Düngemittelpartikel an der Reihenstreuvorrichtung 12 vorbeigeschleudert werden oder vorbeifallen, sondern in jedem Fall nur über die Leitungen 18 zum Boden gelangen.

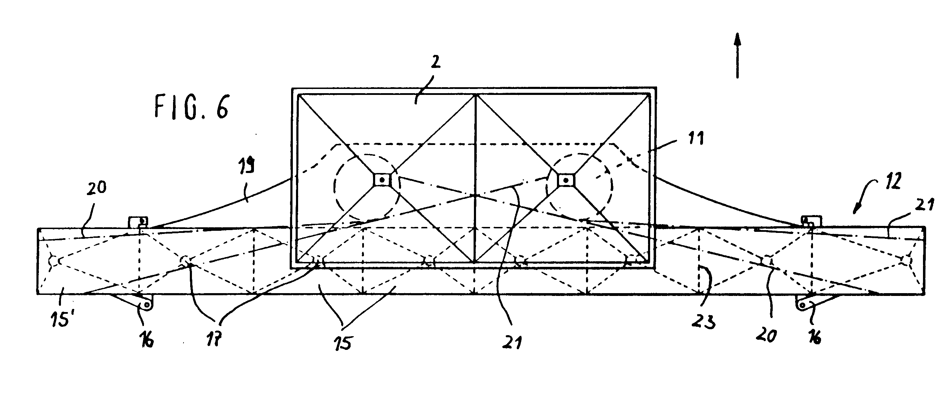

Um eine gleichmäßige Verteilung der von den Wurfelementen 13 abgeschleuderten Düngemittelpartikel auf die einzelnen Teilkästen 15 und 15' zu gewährleisten, überlappen sich die von den beiden nebeneinander angeordneten Schleuderscheiben 11 erzeugten Streufächer. Diese Streufächer sind mit strichpunktierten Linien in der Fig. 6 wiedergegeben, wobei die beiden Linien 20 den Streufächer der von der linken Streuscheibe erzeugt wird, wiedergeben, und die Linien 21 geben den Streufächer der rechten Schleuderscheibe wieder. Um eine genaue Aufteilung der von den Wurfelementen 13 abgeschleuderten Düngemittelpartikel auf die einzelnen Teilkästen 15 und 15' zu gewährleisten, vergrößert sich der Abstand a der Oberkante 22 der Zwischenwände 23 und dem Deckel 24 des Auffangbehälters 14 von der Mittel des Auffangbehälters 14 jeweils seitlich nach außen. Hierdurch wird gewährleistet, daß auch die äußeren Teilkästen mit der gleichen Düngemittelmenge beaufschlagt werden, wie die in Maschinenmitte angeordneten Teilkästen.

Eine Reduzierung der Abwurfgeschwindigkeit der Düngemittelpartikel an den Abwurfkanten 9 der Wurfelemente wird, in allen oben erwähnten Fällen, durch eine Reduzierung der Antriebsdrehzahl der Normalstreuscheiben 3 mit herbeigeführt, wobei die Verringerung der Antriebsdrehzahl der Schleuderscheiben 3 z.B durch ein am Schleuderstreuer angeordnetes Wechselgetriebe 25 erreichbar ist.

## Patentansprüche

1. Verfahren zum Betreiben eines Breitschleuderdüngerstreuers als Reihenstreuvorrichtung zum Düngen von Reihenkulturen, bei dem von mit Wurfelementen (13) versehenen Schleuderscheiben abgeworfener Dünger mit einem Auffangbehälter (5, 15') aufgefangen und über Ausläufe auf mehrere schlauchförmige Leitungen (18) mit Hilfe einer Leiteinrichtung verteilt wird, wobei sich der Dünger nur auf die Breite des Auffangbehälterts verrteilt,
dadurch **gekennzeichnet**,
daß zum Reihenstreuen die Drehzahl der Schleuderscheiben (11) und damit die Abwurfgeschwindigkeit des Düngers an der Abwurfkante (9) der Wurfelemente (4, 13) gegenüber dem breitwürfigen Streuen reduziert wird und daß die Reihenstreuvorrichtung mindestens sechs Ausläufe aufweist.

2. Verfahren nach Anspruch 1,
**dadurch gekennzeichnet,**
daß man die geeignete Antriebsdrehzahl durch entsprechende Einstellung der Motordrehzahl bzw. der Zapfwellendrehzahl des Schleppers herbeiführt.

3. Verfahren nach Anspruch 1 oder 2,
**dadurch gekennzeichnet,**
daß man zum Einstellen der geringen Abwurfgeschwindigkeit ein Wechselgetriebe oder ein regelbares Getriebe zum Antreiben der Schleuderscheiben (3, 11) verwendet.

4. Verfahren nach wenigstens einem der vorangegangenen Ansprüche,
**dadurch gekennzeichnet,**
daß man den Dünger beim Normalstreuen mit dem Breitstreuer über eine Arbeitsbreite von 18 bis 24 m mit einer Geschwindigkeit von 20 bis 30 m pro Sekunde an den Abwerfkanten der Wurfelemente abschleudert und daß man diese Geschwindigkeit dann beim Reihenstreuen über 7 bis 8 Reihen auf etwa 8 bis 10 m pro Sekunde reduziert.

5. Verfahren nach wenigstens einem der vorangegangenen Ansprüche,
**dadurch gekennzeichnet,**
daß man die geringe Abwurfgeschwindigkeit zusätzlich noch durch Einsatz gegenüber dem Normaldüngen veränderter Streuorgane einstellt.

## Claims

1. Method of operating a wide centrifugal fertilizer broadcaster as a row broadcasting device for fertilizing linear cultivations, wherein fertilizer, discharged by centrifugal discs provided with throwing elements (13), is collected by a collecting vessel (15, 15') and is distributed, via outlets, to a plurality of tubular pipes (18) by means of a distributor, the fertilizer only being distributed over the width of the collecting vessel, characterised in that, for the purpose of row broadcasting, the rotational speed of the centrifugal discs (11) and, in consequence, the fertilizer discharge rate at the discharge edge (9) of the throwing elements (4, 13) are reduced when compared with those for the broadcasting operation, and in that the row broadcasting device has at least six outlets.

2. Method according to claim 1, characterised in that the suitable driving speed is produced by appropriate adjustment of the engine speed, or respectively the rotational speed of the power take-off shaft of the tractor.

3. Method according to claim 1 or 2, characterised in that, in order to adjust the low discharge rate, a transmission gear or a variable gear is employed to drive the centrifugal discs (3, 11).

4. Method according to at least one of the preceding claims, characterised in that, for normal broadcasting utilising the wide broadcaster, the fertilizer is centrifuged over a working width of 18 to 24 m at a rate of 20 to 30 m per second at the discharge edges of the throwing elements, and in that this rate is then reduced to approximately 8 to 10 m per second for row broadcasting over 7 to 8 rows.

5. Method according to at least one of the preceding claims, characterised in that the low discharge rate is additionally adjusted by the utilisation of broadcasting means which differ from those utilised for the normal fertilizing operation.

## Revendications

1. Procédé de mise en oeuvre d'un épandeur centrifuge large comme dispositif d'épandage en ligne pour amender des cultures en ligne, selon lequel l'engrais expulsé par des disques d'épandage équipés d'éléments éjecteurs (13) est reçu par un réceptacle (5, 15') et est réparti par des sorties entre plusieurs conduites 18 en forme de tuyau, à l'aide d'un système de conduite, l'engrais n'étant réparti que sur la largeur du réceptacle,
caractérisé en ce que pour l'épandage en ligne, on réduit la vitesse de rotation des disques d'épandage (11) et ainsi la vitesse d'éjection de l'engrais au niveau de l'arête d'éjection (9) des éléments éjecteurs (4, 13) par rapport à l'épandage en grande largeur et le dispositif d'épandage en ligne comporte au moins six sorties.

2. Procédé selon la revendication 1, caractérisé en ce qu'on réalise la vitesse de rotation d'entraînement appropriée par un réglage adéquat de la vitesse de rotation du moteur ou de la vitesse de rotation de la prise de force du tracteur.

3. Procédé selon les revendications 1 ou 2, caractérisé en ce que pour régler la vitesse d'éjection faible, on utilise une transmission à boîte de vitesse ou une transmission réglable pour entraîner les disques d'épandage (3, 11).

4. Procédé selon au moins l'une des revendications précédentes, caractérisé en ce que pour l'épandage normal avec un épandeur large pour une largeur de travail de 18 à 24 mètres, on éjecte l'engrais à une vitesse de 20 à 30 mètres par seconde au niveau des arêtes d'éjection des éléments éjecteurs et en ce qu'on réduit cette vitesse à environ 8-10 mètres par seconde lors de l'épandage en ligne sur 7 à 8 lignes.

5. Procédé selon au moins l'une des revendications précédentes, caractérisé en ce qu'on règle la faible vitesse d'éjection plus par l'utilisation d'organes de commande modifies par rapport à ceux servant à l'épandage normal.
